(19) Europäisches Patentamt

European Patent Office

Office européen des brevets

(11) Veröffentlichungsnummer: **0 190 468
B1**

(12) # EUROPÄISCHE PATENTSCHRIFT

(45) Veröffentlichungstag der Patentschrift:
**27.06.90**

(21) Anmeldenummer: **85201800.1**

(22) Anmeldetag: **06.11.85**

(51) Int. Cl.⁵: **C04B 26/12**, C08L 61/06, C08G 8/00, C08G 14/08 // (C04B26/12, 14:38, 14:42, 22:06, 22:14)

(54) Verfahren zur Herstellung von phenolharzgebundenen Glas- und Mineralfaserprodukten.

(30) Priorität: **08.02.85 DE 3504339**

(43) Veröffentlichungstag der Anmeldung:
**13.08.86 Patentblatt 86/33**

(45) Bekanntmachung des Hinweises auf die Patenterteilung:
**27.06.90 Patentblatt 90/26**

(84) Benannte Vertragsstaaten:
**AT BE CH DE FR GB IT LI LU NL SE**

(56) Entgegenhaltungen:
**DE-B- 2 434 401
FR-A- 2 094 099
FR-A- 2 139 756
US-A- 3 624 247
US-A- 3 932 334

PATENT ABSTRACTS OF JAPAN, Band 3,
Nr. 79 (C-51)[84], 6. Juli 1979; & JP - A
- 54 55094 (NIPPON SHOKUBAI) 05.01.1979**

(73) Patentinhaber: **RÜTGERSWERKE
AKTIENGESELLSCHAFT, Mainzer Landstrasse 217,
D-6000 Frankfurt am Main 1(DE)**

(72) Erfinder: **Jellinek, Karl, Dr., Mörikeweg 1,
D-4860 Iserlohn-Letmathe(DE)**
Erfinder: **Müller, Rolf, Dr., Margarethenstrasse 49,
D-4100 Duisburg 17(DE)**
Erfinder: **Wisomirski, Gerhard, Borkhofer Strasse 6,
D-4100 Duisburg 12(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Zu den wichtigsten Schall- und Wärmedämmstoffen zählen Platten und Matten aus anorganischen Mineralfasern, die zur Erhöhung ihrer Widerstandsfähigkeit gegenüber atmosphärischen und chemischen Einflüssen mit Phenolharz gebunden sind. Als Rohstoffe eignen sich vor allem Diabas, Basalt, verschiedene Schlackenmaterialien und Glas. Die Rohstoffe werden geschmolzen und zu Fasern verarbeitet, die am Ort ihrer Entstehung mit einer wässerigen Phenolharzlösung bedüst und anschließend am Boden der Sammelkammer (Blasenkammer) an ein Transportband angesaugt werden. Der entstandene Filz wird verdichtet und mit dem Transportband durch die Härtekammer befördert. Dort wird das Phenolharz durch heiße Luft von 200 bis 250 °C, die von unten durch die Matte strömt, innerhalb weniger Minuten ausgehärtet.

Als Bindemittel für die Mineralfasern werden wässerige Phenolharzlösungen eingesetzt. Diese werden vor der Verarbeitung mit einem Überschuß an konzentrierter Ammoniak-Lösung versetzt, um den in den Harzlösungen enthaltenen freien Formaldehyd unter Bildung von Hexamethylentetramin zu binden, und anschließend mit Wasser auf einen Trockenharzgehalt von 1 bis 25 % verdünnt.

Seit einigen Jahren ist es üblich, die Phenolharze mit Harnstoff zu modifizieren, um die Bindemittelkosten zu erniedrigen. Harnstoff hat außerdem wie Ammoniak die Eigenschaft, freien Formaldehyd zu binden. Die Modifizierung des wässerigen Phenolharzes mit Harnstoff wird entweder bereits in Verbindung mit der Herstellung des Harzes oder kurz vor der Verarbeitung vorgenommen.

Die auf die Mineralfasern aufgetragene Harzmenge beträgt üblicherweise 3 bis 8 % Trockenharz, bezogen auf die Masse der Mineralfasern.

Die Phenolharz-Bindemittel für die Mineralwollefertigung werden aus Phenol und wässrigen Formaldehyd-Lösungen unter Zusatz eines wasserlöslichen, alkalischen Katalysators auf dem Wege einer Kondensationsreaktion hergestellt. Die Harze sind niedrig kondensiert, sie bestehen überwiegend aus 1- und 2-kernigen Phenolalkoholen (Methylolphenolen).

Als Katalysatoren für die Kondensationsreaktion dienten ursprünglich wässrige Lösungen von Alkalihydroxiden, vor allem Natronlauge. Mit Harzen dieser Art wurden jedoch Mineralwollen erhalten, deren Bindefestigeit bei Einwirkung von Feuchtigkeit stark nachließ und die deshalb auf die Dauer nicht den Erfordernissen der Praxis entsprachen. Auch eine Neutralisierung des Alkalianteils dieser Harze nach Beendigung der Kondensation, z.B. mit verdünnter Schwefelsäure, brachte keine wesentliche Verbesserung der Feuchtigkeitsbeständigkeit der daraus hergestellten Mineralwolleprodukte. Diese mangelnde Feuchtigkeitsstabilität wurde verursacht durch die Tatsache, daß das Phenolharz auch im gehärteten Zustand einen wasserlöslichen Ascheanteil - bestehend z.B. aus Natriumoxid, Natriumcarbonat und Natriumsulfat - enthielt.

Aus diesem Grunde werden als Katalysatoren für die Kondensation der Phenolharze Erdalkalihydroxide, vor allem Calciumhydroxid, eingesetzt. Diese haben gegenüber Alkalihydroxiden den Vorteil, daß sie nach Beendigung der Kondensation durch Zusatz von verdünnter Schwefelsäure, von Kohlendioxid, Ammoniumsulfat, Ammoniumcarbonaten gefällt und in Form wasserunlöslicher Salze (z.B. Calciumcarbonat, Calciumphosphat oder Calciumsulfat) aus der wässrigen Lösung abgetrennt werden können. Mit dieser Verfahrensweise werden Harze erhalten, die nahezu aschefrei sind. Die damit hergestellten Mineralfaserprodukte sind von ausgezeichneter Feuchtigkeitsbeständigkeit, insbesondere wenn dem Harz noch geringe Mengen Aminosilan-Haftmittel (z.B. 0,05 %, bezogen auf Trockenharz) zugefügt werden.

Ein schwerwiegender Nachteil des geschilderten Verfahrens ist jedoch die Tatsache, daß unlösliche Niederschläge anfallen, die in einem aufwendigen Prozeß abfiltriert werden müssen, da anderenfalls bei der Verarbeitung des Harzes mit Verstopfung von Düsen zu rechnen ist. Die Filtrierung des Harzes ist mit erheblichen Verlusten an Harz verbunden. Außerdem ist die Deponierung des phenolharzhaltigen Filterkuchens teuer und stellt heutzutage ein schwieriges Umweltproblem dar.

Es ist daher Aufgabe der vorliegenden Erfindung, ein Verfahren zur Herstellung von phenolharzgebundenen Glas- und Mineralfaserprodukten bereitzustellen, bei dem bei mindestens gleicher Feuchtigkeitsbeständigkeit der Produkte keine störenden Niederschläge anfallen.

Die Lösung der Aufgabe erfolgt durch ein Verfahren gemäß der Ansprüche 1 bis 10.

Bei dem erfindungsgemäßen Verfahren geht man von einem wässrigen Phenolharz aus, das mit Calciumhydroxid als Katalysator kondensiert wurde. Diesem Ausgangsprodukt wird zunächst eine Base in einer Menge zugesetzt, daß ein pH-Wert von 7,5 bis 11, vorzugsweise von 8 bis 10,5 resultiert. Anschließend werden langsam so viel Sulfat-Ionen eingebracht, daß sich ein 0,8- bis 2,0-faches stöchiometrisches Verhältnis der Sulfat-Ionen zu den Calcium-Ionen des Katalysators einstellt.

Dies kann mittels Schwefelsäure oder bevorzugt auch durch Ammoniumsulfat-Zusatz erfolgen. Durch gleichzeitige Zugabe von weiterer Base ist darauf zu achten, daß der pH-Bereich in den oben angegebenen Grenzen verbleibt. Dabei bildet sich überraschenderweise kein Niederschlag von Calciumsulfat, sondern die Harzlösung bleibt weitgehend klar und verändert sich je nach Zusammensetzung während einiger Stunden bis mehrerer Tage nicht und kann deshalb innerhalb dieser Zeitspanne verarbeitet werden, gegebenenfalls nach vorheriger Verdünnung mit Wasser und nach Zusatz von Aminosilan als haftverbesserndem Mittel.

Die Verhinderung des Niederschlages von Calciumsulfat ist wahrscheinlich auf die Bilding eines relativ stabilen metallorganischen Komplexes der Calcium-Ionen mit den Ein- und Mehrkernphenolen bzw. deren Methylol-Verbindungen zurückzuführen. Dies wird besonders deutlich, wenn man die Harzlösung eindampft und das Harz in Form eines dünnen Filmes aushärtet. Es entsteht ein klarer, durchsichtiger, hellgelber Film, der keinerlei Trübung durch ausgeschiedenes Calciumsulfat aufweist. Der anorganische Katalysatoranteil ist demnach Bestandteil der Bindemittel-Moleküle geworden und erhöht entsprechend die Harzausbeute.

Durch Modifizierung des Phenolharzes mit Harnstoff wird die Feuchtigkeitsbeständigkeit der damit hergestellten Glas- und Mineralfaserprodukte zwar beeinträchtigt; sie entspricht aber in den meisten Anwendungsfällen immer noch den Erfordernissen der Praxis, sofern die Harnstoffmenge 100 Gewichtsteile, bezogen auf 100 Gewichtsteile des eingesetzten Phenols, nicht übersteigt. Als Basen im erfindungsgemäßen Verfahren können Ammoniak und alle basischen organischen Verbindungen eingesetzt werden. Beispiele für diese organischen Basen sind Methyl-, Äthyl-, Propyl-, i-Propyl-, Butyl-, Dimethyl-, Trimethyl-, Diäthyl-, Triäthyl-, Äthanol-, Diäthanol- oder Triäthanolamin.

Der Einsatz von Alkalihydroxiden ist zwar prinzipiell möglich, aber insofern nicht empfehlenswert, als dadurch die Feuchtigkeitsbeständigkeit der Faserprodukte reduziert wird. Die bevorzugte Base ist Ammoniak in Form von Gas oder der wäßrigen Lösung.

Durch Zugabe von Ammoniak zu der wässrigen Harzlösung wird nicht nur der Restgehalt des Harzes an freiem Formaldehyd unter Bildung von Hexamethylentetramin gebunden, sondern die Wasserverdünnbarkeit und die Lagerfähigkeit des Harzsystems werden dadurch im allgemeinen verbessert. Am günstigsten ist es in dieser Hinsicht, die Harzlösung auf einen pH-Bereich von 8,5 bis 10,5 einzustellen.

Das wässerige Phenol-Resol wird durch Umsetzung von Phenol und Formaldehyd in einem molaren Verhältnis von 1 : 1,3, bis 1 : 4 unter Verwendung von 0,5 bis 10% Calciumhydroxid, berechnet auf die eingesetzte Menge Phenol, bei Temperaturen bis 100°C hergestellt.

Zur Umwandlung des im Harz enthaltenen Calciumhydroxids in den wasser- und harzlöslichen metallorganischen Komplex wird nach diesem Verfahren Ammoniumsulfat bevorzugt. Die für die Umwandlung erforderlichen Sulfat-Ionen können aber auch auf andere Weise eingebracht werden, so zum Beispiel durch Zugabe von Ammoniumhydrogensulfat oder verdünnter Schwefelsäure zu der mit Ammoniak verdünnten Harzlösung. In jedem Fall soll annähernd die Menge Sulfat- Ionen zugesetzt werden, die zur Bindung der in der Bindemittellösung vorhandenen Calcium-Ionen stöchiometrisch erforderlich ist. Die Abweichung von der stöchiometrischen Menge soll nicht mehr als 100 % nach oben oder 20 % nach unten betragen. Bei stärkeren Abweichungen von der stöchiometrischen Menge kann die Feuchtigkeitsbeständigkeit der mit der Bindemittellösung gefertigten Glas- und Mineralwolleprodukte beeinträchtigt werden.

Zur Prüfung der Feuchtigkeitsbeständigkeit im Laboratorium eignet sich z.B. folgender Schnelltest: 100 Gewichtsteile Quarzsand werden mit 10 Gewichtsteilen einer 40%igen Harzlösung (Trockenharzgehalt bestimmt nach DIN 16 916-02-H 1) gut vermischt, in Stabformen eingedrückt (Abmessungen z.B. 170 x 22 x 22 mm, versehen mit Trennmittel) und 2 Stunden im Ofen bei 180°C gehärtet. Nach Abkühlung (über Nacht) wird von 5 der auf diese Weise hergestellten Prüfstäbe die Biegefestigkeit im trockenen Zustand geprüft. 5 weitere Prüfstäbe werden einem Koch-Wechsel-Test unterworfen, z.B. folgendermaßen:

4 Stunden Lagerung der Stäbe in Wasser von 100°C,
16 Stunden Lagerung der Stäbe in trockener Luft von 60°C(im Ofen)
4 Stunden Lagerung der Stäbe in Wasser von 100°C,
2 Stunden Abkühlung der Stäbe in fließendem Wasser von 15 - 20°C.

Anschließend wird die Biegefestigkeit im nassen Zustand geprüft.

Die in der Tabelle zusammengestellten Ergebnisse zeigen, daß unter den mit Calciumhydroxid kondensierten Harze nur jene zu einer guten Feuchtigkeitsbeständigkeit führen, bei denen der Katalysator vor der Verarbeitung entweder in erfindungsgemäßer Weise umgewandelt (Beispiele 1 und 2) oder als unlösliches Carbonat bzw. Sulfat abgetrennt wird (Vergleichsbeispiel 1 und 2). Wenn dagegen diese Umwandlung unterbleibt (Vergleichsbeispiel 3) oder wenn das Harz mit Alkalihydroxid kondensiert wird (Vergleichsbeispiel 4), fällt die Feuchtigkeitsbeständigkeit stark ab. Unter den in der Tabelle aufgeführten Beispielen sind die erfindungsgemäßen Beispiele die einzigen, bei denen einerseits kein abzufiltrierender Niederschlag entsteht, andererseits das ausgehärtete Harz trotzdem eine gute Feuchtigkeitsbeständigkeit aufweist.

Beispiel 1

100 g Phenol werden mit 212,8 g einer 45 %igen wässrigen Formalin-Lösung und 5 g Calciumhydroxid vermischt und so lange bei 60°C gehalten, bis eine auf 20°C abgekühlte Probe beim Verdünnen mit destilliertem Wasser im Verhältnis 1 : 5 noch klar bleibt, im Verhältnis von 1 : 10 aber trübe wird. Anschließend

EP 0 190 468 B1

kühlt man den Ansatz auf eine Temperatur von 10 bis 20°C ab und fügt danach 25%ige Ammoniak-Lösung zu, bis die Harzlösung einen pH-Wert von 9,8 aufweist.

Zur Herstellung von Prüfstäben für die Schnellprüfung der Feuchtigkeitsbeständigkeit werden der Gesamtmenge der Lösung 0,035 g Silan A 1000 sowie 35,7 g einer 25%igen wässerigen Lösung von Ammoniumsulfat zugefügt, und die Lösung wird mit Wasser auf einen Trockenharzgehalt von 40 % verdünnt.

Beispiel 2

100 g Phenol werden mit 212,8 g einer 45%igen wässrigen Formalin-Lösung und 5 g Calciumhydroxid vermischt und so lange bei 60°C gehalten, bis eine auf 20°C abgekühlte Probe beim Verdünnen mit destilliertem Wasser im Verhältnis von 1 : 5 noch klar bleibt, im Verhältnis von 1 : 10 aber trübe wird.

Nach Zusatz von 50 g Harnstoff (in fester Form) wird der Ansatz 1 Stunde bei 40°C gehalten und danach auf eine Temperatur von 10 bis 20°C abgekühlt. Anschließend fügt man 25%ige Ammoniak-Lösung zu, bis die Harzlösung einen pH-Wert von 9,8 aufweist.

Zur Herstellung von Prüfstäben für die Schnellprüfung der Feuchtigkeitsbeständigkeit werden der Gesamtmenge der Lösung 0,050 g Silan A 1100 sowie 36,7 g einer 25%igen wässerigen Lösung von Ammoniumsulfat zugefügt, und die Lösung wird mit Wasser auf einen Trockenharzgehalt von 40 % verdünnt.

Vergleichsbeispiel 1

100 g Phenol werden mit 212,8 g einer 45%igen wässerigen Formalin-Lösung und 5 g Calciumhydroxid vermischt und so lange bei 60°C gehalten, bis eine auf 20°C abgekühlte Probe beim Verdünnen mit destilliertem Wasser im Verhältnis von 1 : 5 noch klar bleibt, im Verhältnis 1 : 10 aber trübe wird.

Nach Zusatz von 50 g Harnstoff (in fester Form) wird der Ansatz 1 Stunde bei 40°C gehalten und danach auf eine Temperatur von 10 bis 20°C abgekühlt. Anschließend versetzt man die Harzlösung erst mit 25%iger Ammoniak-Lösung bis zu einem pH-Wert von 9,8, dann mit 26,7 g einer 20%igen wässrigen Lösung von Ammoniumhydrogencarbonat. Der hierbei gebildete voluminöse Niederschlag von Calciumcarbonat wird abfiltriert.

Die vom Niederschlag befreite Harzlösung wird mit Wasser auf einen Trockenharzgehalt von 40 % verdünnt.

Vor der Herstellung der Prüfstäbe werden 0,050 g Silan A 1100 (bezogen auf die Gesamtmenge der Lösung) zugesetzt.

Vergleichsbeispiel 2

100 g Phenol werden mit 212,8 g einer 45%igen wässrigen Formalin-Lösung und 5 g Calciumhydroxid vermischt und so lange bei 60°C gehalten, bis eine auf 20°C abgekühlte Probe beim Verdünnen mit destilliertem Wasser im Verhältnis von 1 : 10 noch klar bleibt, im Verhältnis von 1 : 20 aber trübe wird.

Nach Zusatz von 50 g Harnstoff (in fester Form) wird der Ansatz 1 Stunde bei 40°C gehalten und danach auf eine Temperatur von 10 bis 20°C abgekühlt. Anschließend fügt man 37%ige Schwefelsäure zu, bis die Harzlösung einen pH-Wert von 7,0 aufweist. Der hierbei gebildete voluminöse Niederschlag von Calciumsulfat wird abfiltriert.

Die vom Niederschlag befreite Harzlösung wird zur Herstellung von Prüfstäben mit 25%iger Ammoniak-Lösung auf einen pH-Wert von 9,8 eingestellt, mit Wasser auf einen Trockenharzgehalt von 40 % verdünnt und schließlich mit 0,050 g Silan A 1100 (bezogen auf die Gesamtmenge der Lösung) versetzt.

Vergleichsbeispiel 3

100 g Phenol werden mit 212,8 g einer 45%igen wässrigen Formalin-Lösung und 5 g Calciumhydroxid vermischt und so lange bei 60°C gehalten, bis eine auf 20°C abgekühlte Probe beim Verdünnen mit destilliertem Wasser im Verhältnis von 1 : 5 noch klar bleibt, im Verhältnis von 1 : 10 aber trübe wird.

Nach Zusatz von 5 g Harnstoff (in fester Form) wird der Ansatz 1 Stunde bei 40°C Gehalten und danach auf eine Temperatur von 10 bis 20°C abgekühlt. Anschließend fügt man 25%ige Ammoniaklösung zu, bis die Harzlösung einen pH-Wert von 9,8 aufweist, und verdünnt die Harzlösung mit Wasser bis zu einem Trockenharzgehalt von 40 %. Zur Herstellung von Prüfstäben werden der Lösung schließlich noch 0,050 g Silan A 1100 (bezogen auf die Gesamtmenge der Lösung) zugesetzt.

In diesem Beispiel unterbleibt sowohl der Zusatz von Ammoniumsulfat als auch die Ausfällung des Katalysators. Das ausgehärtete Harzbindemittel enthält deshalb einen Ascheanteil, der wasserlöslich ist und alkalisch reagiert.

4

Vergleichsbeispiel 4

100 g Phenol werden mit 212,8 g einer 45%igen wässrigen Formalin-Lösung und 6 g einer 50%igen Natronlauge vermischt und so lange bei 60°C gehalten, bis eine auf 20°C abgekühlte Probe beim Verdünnen mit destilliertem Wasser im Verhältnis von 1 : 10 noch klar bleibt, im Verhältnis von 1 : 20 aber trübe wird.

Nach Abkühlen auf 40°C neutralisiert man den Ansatz mit Hilfe von 65%iger wässeriger p-Toluolsulfonsäure bis zu einem pH-Wert von 7,0, fügt 50 g Harnstoff (in fester Form) zu, hält den Ansatz 1 Stunde bei 40°C und kühlt schließlich auf 10 bis 20°C ab.

Zur Herstellung von Prüfstäben stellt man den pH-Wert der Harzlösung durch Zugabe von 25%iger Ammoniak-Lösung auf 9,8 ein, verdünnt die Lösung mit Wasser bis zu einem Trockenharzgehalt von 40% und fügt 0,050 g Silan A 1100 (bezogen auf die Gesamtmenge der Lösung) zu.

Die folgende Tabelle zeigt die erhaltenen Ergebnisse:

Tabelle

| Bindemittel | Katalysator | Harnstoffmenge je 100 g Phenol-Einsatz g | Umwandlungsmittel für den Katalysator | Filtrierung | Biegefestigkeit von Prüfstäben | | |
|---|---|---|---|---|---|---|---|
| | | | | | trocken N/mm$^2$ | nach Koch-Wechsel-Test N/mm$^2$ | % Restfestigkeit |
| Beispiel 1 gemäß Erfindung | Ca(OH)$_2$ | 0 | NH$_3$+(NH$_4$)$_2$SO$_4$ | – | 6,1 | 4,2 | 68,8 |
| Beispiel 2 gemäß Erfindung | Ca(OH)$_2$ | 50 | NH$_3$+(NH$_4$)$_2$SO$_4$ | – | 5,9 | 2,7 | 45,8 |
| Vergleichsbeispiel 1 | Ca(OH)$_2$ | 50 | NH$_4$HCO$_3$ | + | 5,6 | 2,1 | 37,5 |
| Vergleichsbeispiel 2 | Ca(OH)$_2$ | 50 | H$_2$SO$_4$ | + | 5,2 | 1,9 | 36,5 |
| Vergleichsbeispiel 3 | Ca(OH)$_2$ | 50 | – | – | 5,6 | 0,7 | 12,5 |
| Vergleichsbeispiel 4 | NaOH | 50 | p-Toluolsulfonsäure | – | 5,1 | 0,5 | 9,8 |

EP 0 190 468 B1

**Patentansprüche**

1. Verfahren zur Herstellung von phenolharzgebundenen Glas- und Mineralfaserprodukten, wobei als Bindemittel ein wässeriges Phenol-Formaldehyd-Harz verwendet wird, das mit Calciumhydroxid als Katalysator kondensiert wird, **dadurch gekennzeichnet**, daß dessen Calciumionen danach vor der Verarbeitung durch Zugabe einer Base in einer Menge, daß der pH-Wert im Bereich von 7,5 bis 11 eingehalten wird und Sulfat-Ionen in einer Menge von 80 bis 200 % bezogen auf die stöchiometrisch zur Bindung der Calcium-Ionen notwendigen Menge in einen wasserlöslichen Komplex übergeführt werden, der mindestens 3 Stunden ohne jegliche Ausfällung beständig bleibt, und das Harz in dieser Form oder nach Verdünnung mit Wasser innerhalb der genannten Zeitspanne auf das anorganische Fasermaterial durch Sprühen oder Tauchen aufgebracht und thermisch ausgehärtet wird.

2. Verfahren nach Anspruch 1, **dadurch gekennzeichnet**, daß das molare Verhältnis von Phenol zu Formaldehyd des wässrigen Phenol-Formaldehyd-Harzes 1 : 1,3 bis 1 : 4,0 beträgt.

3. Verfahren nach Anspruch 1 und 2, **dadurch gekennzeichnet**, daß als Kondensationskatalysator für das wasserlösliche Phenol-Formaldehyd-Harz 0,5 bis 10,0 Prozent Calciumhydroxid, berechnet auf den Phenol-Einsatz, verwendet werden.

4. Verfahren nach Anspruch 1 bis 3, **dadurch gekennzeichnet**, daß das mit Calciumhydroxid kondensierte wässrige Phenol-Formaldehyd-Harz durch Zusatz von Harnstoff weiter modifiziert wird, und zwar in einer Menge bis zu 100 Gewichtsteilen Harnstoff, bezogen auf 100 Gewichtsteile eingesetztes Phenol.

5. Verfahren nach Anspruch 1 bis 4, **dadurch gekennzeichnet**, daß dem Bindemittelgemisch Base in einer Menge zugefügt wird, daß der resultierende pH-Bereich 8,5 bis 10,5 beträgt.

6. Verfahren nach Anspruch 1 bis 5, **dadurch gekennzeichnet**, daß als Base Ammoniak verwendet wird.

7. Verfahren nach Anspruch 1 bis 5, **dadurch gekennzeichnet**, daß die Sulfat-Ionen in Form von Ammoniumsulfat in das Bindemittelgemisch eingebracht werden.

8. Verfahren nach Anspruch 1 bis 6 **dadurch gekennnzeichnet**, daß die Sulfat-Ionen in einer Menge von 80 bis 120 Prozent, bezogen auf die stöchiometrisch zur Bindung der in dem Bindemittelgemisch vorhandenen Calcium-Ionen erforderliche Sulfat-Menge, zugefügt werden.

9. Verfahren nach Anspruch 1 bis 7, **dadurch gekennzeichnet**, daß das stabile Bindemittelgemisch entweder direkt oder nach entsprechender weiterer Verdünnung mit Wasser mittels Hochdruckpumpen über Zerstäubungsdüsen in den Blase- bzw. Sammelkammern von kontinuierlich arbeitenden Glas- und Mineralfaserproduktionsanlagen auf die Fasern vor deren Sammlung und Verdichtung zum Faservlies aufgebracht wird.

10. Verfahren nach Anspruch 1 bis 8, **dadurch gekennzeichnet**, daß das Bindemittel in einer Menge von 1 bis 10 Prozent, vorzugsweise 3 bis 8 Prozent, gerechnet als Trockensubstanz, auf die Glas- und Mineralfasern aufgebracht wird.

**Claims**

1. A process for preparing phenol-resin-bonded glass and mineral fibre products, in which an aqueous phenol formaldehyde resin, which is condensed with calcium hydroxide as a catalyst, is used as a binder, characterized in that the calcium ions of the latter before processing by the addition of a base in a quantity [such] that the pH value is maintained in the range of from 7.5 to 11 and [of] sulphate ions in a quantity of from 80 to 200% relative to the quantity required stoichiometrically for binding the calcium ions are then converted into a water-soluble complex which remains constant for at least 3 hours without any precipitation, and the resin in this form or after dilution with water is applied to the inorganic fibre material by spraying or immersion within the aforesaid period of time and is thermally age-hardened.

2. A process according to Claim 1, characterized in that the molar ratio of phenol to formaldehyde of the aqueous phenol formaldehyde resin comes to from 1:1.3 to 1:4.0.

3. A process according to Claims 1 and 2, characterized in that from 0.5 to 10.0% of calcium hydroxide, calculated on the phenol charge, is used as the condensation catalyst for the water-soluble phenol formaldehyde resin.

4. A process according to Claims 1 to 3, characterized in that the aqueous phenol formaldehyde resin condensed with calcium hydroxide is further modified by the addition of urea, namely in a quantity of up to 100 parts by weight of urea, relative to 100 parts by weight of the phenol introduced.

5. A process according to Claims 1 to 4, characterized in that [the] base is added to the binder mixture in a quantity [such] that the resulting pH range amounts to from 8,5 to 10.5.

6. A process according to Claims 1 to 5, characterized in that ammonia is used as the base.

7. A process according to Claims 1 to 5, characterized in that the sulphate ions are introduced in the form of ammonium sulphate into the binder mixture.

8. A process according to Claims 1 to 6, characterized in that the sulphate ions are added in a quantity of from 80 to 120%, relative to the quantity of sulphate required stoichiometrically for binding the calcium ions present in the binder mixture.

9. A process according to Claims 1 to 7, characterized in that the stable binder mixture is applied to the fibres – either directly or after a suitable further dilution with water – by means of high-pressure pumps by way of spray diffusers in the blasting or collection chambers of continuously operating glass and mineral fibre production plants before the collection and compression of the fibres to form a fibre fleece.

10. A process according to Claims 1 to 8, characterized in that the binder is applied in a quantity of from 1 to 10%, preferably from 3 to 8%, calculated as dry substance, to the glass and mineral fibres.

## Revendications

1. Procédé pour la fabrication de produits en fibres de verre et fibres minérales liés par une résine phénolique, une résine phénol-formaldéhyde aqueuse condensée avec de l'hydroxyde de calcium en tant que catalyseur étant utilisée comme liant, caractérisé en ce que ses ions calcium sont ensuite transformés, préalablement au traitement, en un complexe hydrosoluble par addition d'une base en une quantité permettant de maintenir la valeur du pH dans le domaine de 7,5 à 11 et d'ions sulfate en une quantité de 80 à 200% rapportés à la quantité nécessaire stoechiométriquement pour la liaison des ions calcium, lequel complexe hydrosoluble demeure stable pendant au moins 3 heures sans aucune précipitation, et que la résine, sous cette forme ou après dilution avec de l'eau à l'intérieur de l'espace de temps précité, est déposée sur la matière en fibres inorganiques par pulvérisation ou par immersion et durcie thermiquement.

2. Procédé selon la revendication 1, caractérisé en ce que le rapport molaire de phénol à formaldéhyde de la résine phénol-formaldéhyde aqueuse s'étend de 1:1,3 à 1:4,0.

3. Procédé selon les revendications 1 et 2, caractérisé en ce qu'on met en œuvre, en tant que catalyseur de condensation pour la résine phénol-formaldéhyde aqueuse, 0,5 à 10,0 pourcent d'hydroxyde de calcium, calculés sur la charge de phénol.

4. Procédé selon les revendications 1 à 3, caractérisé en ce que la résine phénol-formaldéhyde aqueuse condensée avec de l'hydroxyde de calcium subit une modification complémentaire par addition d'urée et ce en une quantité allant jusqu'à 100 parties en poids d'urée, rapportées à 100 parties en poids du phénol mis en œuvre.

5. Procédé selon les revendications 1 à 4, caractérisé en ce que l'on ajoute au mélange de liant une base en une quantité telle que le domaine de pH résultant se situe entre 8,5 et 10,5.

6. Procédé selon les revendications 1 à 5, caractérisé en ce qu'on utilise de l'ammoniaque en tant que base.

7. Procédé selon les revendications 1 à 5, caractérisé en ce que les ions sulfate sont introduits dans le mélange de liant sous forme de sulfate d'ammonium.

8. Procédé selon les revendications 1 à 6, caractérisé en ce que les ions sulfate sont ajoutés en une quantité de 80 à 120 pourcent, rapportés à la quantité de sulfate nécessaire stoechiométriquement pour la liaison des ions calcium présents dans le mélange de liant.

9. Procédé selon les revendications 1 à 7, caractérisé en ce que le mélange de liant stable est appliqué soit directement, soit après une dilution supplémentaire correspondante avec de l'eau au moyen de pompes haute pression par des buses de pulvérisation montées dans les chambres de soufflage ou collecteurs d'installation de production de fibres de verre et de fibres minérales fonctionnant en continu, sur les fibres avant leur rassemblement et compression en vue de la formation de la nappe de fibres.

10. Procédé selon les revendications 1 à 8, caractérisé en ce que le liant est appliqué sur les fibres de verre et fibres minérales en une quantité de 1 à 10 pourcent, de préférence de 3 à 8 pourcent, calculés en tant que matière sèche.